# EUROPÄISCHE PATENTSCHRIFT

(11) **EP 2 784 102 B1**
(45) Veröffentlichungstag und Bekanntmachung des Hinweises auf die Patenterteilung: **09.12.2015**
(21) Anmeldenummer: 13161146.9
(22) Anmeldetag: 26.03.2013
(51) Int. Cl.: C08G 69/46, C08G 69/16, C08J 11/02, B01F 5/06, B01F 5/10

(54) **Verfahren und Vorrichtung zur kontinuierlichen Rückführung von Extraktwässern im Polyamidherstellungsprozess**
Method and device for the continuous return of extract water in the polyamide production process
Procédé et dispositif pour le retour en continu d'eaux d'extraction dans un processus de fabrication de polyamide

(43) Veröffentlichungstag der Anmeldung: 01.10.2014
(73) Patentinhaber: Uhde Inventa-Fischer GmbH, 13509 Berlin (DE)
(72) Erfinder: Katzer, Johannes, 10439 Berlin (DE); Siebecke, Ekkehard, 10825 Berlin (DE)
(74) Vertreter: Pfenning, Meinig & Partner GbR

(56) Entgegenhaltungen:
- DE-T2- 69 116 431

## Beschreibung

Die Erfindung betrifft ein Verfahren zur kontinuierlichen Rückführung von Extraktwässern im Polyamidherstellungsprozess, der die Schritte der Polymerisation, der Granulierung und der anschließenden Extraktion der Granulate mit Wasser aufweist. Ebenso betrifft die Erfindung eine Vorrichtung, mit der die Rückführung der Extraktwässer ermöglicht wird, was eine ökonomische Verfahrensführung erlaubt.

Eine Besonderheit bei der Polyamid 6-Herstellung ist der relativ hohe Gleichgewichtsanteil des Monomers Caprolactam, welcher im produzierten Polymer zunächst vorliegt. Dieser liegt bei einer Verarbeitung in der Schmelze je nach Reaktionstemperatur im Bereich zwischen 6 und 10 Gew.-%. Dieses wirkt u.a. als Weichmacher und muss abhängig von der Anwendung bis auf einen geringen Anteil extrahiert werden. Dies geschieht großtechnisch über eine Extraktion mit heißem Wasser. Da die Rohstoffkosten maßgeblich zu den Herstellungskosten von Polyamid 6 beitragen, kommt eine Entsorgung der erhaltenen Extraktwässer, die typischerweise 10-12 Gew.-% organische Anteile enthalten, aus wirtschaftlichen Gesichtspunkten nicht in Frage.

Der schematische Ablauf des Polyamidherstellungsprozesses beruht zunächst auf einer Polymerisation mit anschließender Granulierung. Die hierbei erhaltenen Polymergranulate werden dann einer Extraktion mit Wasser zugeführt. Während die extrahierten Granulate getrocknet werden, wird das Extraktwasser, das im Wesentlichen Caprolactam und weitere Oligomere enthält, gesammelt und einer Eindampfung unterzogen. Hierbei kommt es zu einer Konzentrierung des Extraktwassers, während das enthaltene Wasser destillativ abgetrennt wird. Die konzentrierten Extraktwässer werden dann wieder dem Schritt der Polymerisation zugeführt.

Die Extraktwässer bestehen neben Wasser zum größten Teil aus Caprolactam, gefolgt von linearen und cyclischen Oligomeren und u.U. Resten von Additiven, Stabilisatoren, Pigmenten etc. Die Aufarbeitung und deren Aufwand, im Hinblick auf eine weitere Verwendung, wie z.B. eine Rückführung in den Prozess, hängen demnach sowohl von den Bestandteilen als auch von den Anforderungen an die Qualität bzw. Reinheit ab.

Während anorganische und feste Bestandteile in der Regel über Filtrationen, Adsorptionsmittel oder Ionentauscher entfernbar sind, ist besonders die Rückführung der (cyclischen) Oligomere kritisch. Ein Verwerfen kommt aus wirtschaftlichen Gründen erneut nicht in Frage, da damit immer noch ein nennenswerter Teil des Rohstoffes ungenutzt bliebe. Deshalb wird das Gemisch aus Caprolactam und Oligomeren entweder innerhalb einer Produktionslinie zurückgeführt (direkte Rückführung) oder die Extraktwässer aus zwei oder mehr Linien in einer Linie vereinigt (zusammenfassende direkte Rückführung).

Je nach Qualitätsanforderungen an das Produkt, müssen die Oligomere, im Besonderen das cyclische Dimer, vor der Rückführung abgebaut werden. Andernfalls würde im Falle einer direkten Rückführung der Gleichgewichtswert des Dimers im Produkt erreicht, welcher beim Verzicht auf eine Rückführung der Extraktwässer (Virgin-Lactam-Linie) deutlich unterschritten werden kann. Im Falle einer zusammenfassenden Rückführung ohne Abbaustufe könnte im besten Fall der Gleichgewichtswert für das Dimer erreicht werden, in der Regel bleibt dieser aber deutlich überschritten. Ein erhöhter Gehalt an cyclischem Dimer am Ausgang der Polymerisation bedeutet entweder eine verminderte Qualität gegenüber einer Virgin-Lactam-Linie oder muss mit einem erhöhten Extraktionsaufwand kompensiert werden.

Es wäre deshalb wünschenswert, wenn der Gehalt des cyclischen Dimers trotz Rückführung am Ausgang der Polymerisation dem einer Virgin-Lactam-Linie vergleichbar wäre und dies ohne zusätzliche Energie- oder Katalysatorkosten erreichbar wird.

Es sind verschiedene Strategien vorgeschlagen worden, wie die Extraktwässer sinnvoll wiederverwendet werden können. Dazu gehören zum einen die sogenannte direkte Rückführung, bei denen die Extraktwässer nur aufkonzentriert und in den Prozess rückgeführt werden. Dies geschieht entweder innerhalb einer Linie, wie z.B. in GB 1 525 992 beschrieben oder, sofern mehrere Produktionslinien vorhanden sind, auch als Zusammenführung der aufkonzentrierten Extraktwässer mehrerer Linien in einer Linie (US 6,194,537). Der hohen Wirtschaftlichkeit dieser Methoden stehen in der Regel signifikante Qualitätseinbußen gegenüber, die entweder akzeptiert oder an anderer Stelle durch Mehraufwand, z.B. bei der Extraktion, kompensiert werden müssen.

Alternativ können die Extraktwässer vor ihrer Rückführung behandelt werden, um einem Qualitätsverlust vorzubeugen. Eine Möglichkeit ist die destillative Gewinnung von Caprolactam, wie z.B. in US 4,892,624 beschrieben, welches anschließend dem Polymerisationsprozess wieder zugeführt werden kann. Der besonderen Reinheit des rückgeführten Materials stehen hier ein erheblicher energetischer Mehraufwand und in der Regel ein nicht zu vermeidender Rohstoffverlust gegenüber. Zusätzlich müssen für eine möglichst hohe Rohstoffausbeute die Oligomere depolymerisiert werden und damit zusätzliche Verfahrensstufen und Kosten für z.B. Katalysatoren einkalkuliert werden.

Eine weitere Möglichkeit ist die sogenannte Repolymerisation. Hierbei werden die aufkonzentrierten Extraktwässer typischen Polymerisationstemperaturen (220-280°C) ausgesetzt und das erhaltene Polymer erst anschließend dem Gesamtprozess wieder zugeführt. Z.B. wird in DE 195 31 990 ein Verfahren zur Repolymerisation von Extraktwässern beschrieben, bei dem Wassergehalte zwischen 3 und 15 Gew.-% Wasser vorliegen; DE 199 25 906 beschreibt eine Repolymerisation unter Einsatz von Katalysatoren. Wie in DE 691 16 431 gezeigt, lassen sich über eine Repolymerisation die cyclischen Dimere soweit abbauen, dass auch nach der Rückführung in den Gesamtprozess diesbezüglich kein Qualitätsverlust auftritt. Die Repolymerisation kommt grundsätzlich ohne zusätzliche Chemikalien oder Katalysatoren sowie prinzipiell ohne zusätzliche Energie aus und hat keinen Rohstoffverlust. Um den Oligomerabbau effektiv zu gestalten, sind allerdings hohe Wassergehalte notwendig, die bei den benötigten Temperaturen einen entsprechend hohen Dampfdruck mit sich bringen. Um eine solche Stufe mit einem üblichen Prozess verknüpfen zu können und eine kontinuierliche, stabile Betriebsweise zu gewährleisten, muss vor allem sichergestellt werden, dass die Schmelze beim Entspannen nicht gefriert.

Ausgehend hiervon war es Aufgabe der vorliegenden Erfindung, eine verbesserte Rückführung von Extraktwässern zu ermöglichen, die sowohl hinsichtlich der Raum-Zeit-Ausbeute als auch der Sicherheit gegenüber den aus dem Stand der Technik bekannten Verfahren überlegen ist.

Diese Aufgabe wird durch das Verfahren mit dem Merkmal des Anspruchs 1 und die Vorrichtung mit den Merkmalen des Anspruchs 12 gelöst. Die weiteren abhängigen Ansprüche zeigen vorteilhafte Weiterbildungen auf.

Erfindungsgemäß wird ein Verfahren zur kontinuierlichen Rückführung von Extraktwässern in einem Polyamidherstellungsprozess mit den Schritten der Polymerisation, der Granulierung und der anschließenden Extraktion der Granulate mit Wasser bereitgestellt, wobei die Extraktwässer mindestens einer Herstellungslinie aufkonzentriert und als Extraktwasserstrom einer Repolymerisation zum Abbau zyklischer Oligomere unterzogen und anschließend als Repolymerisat mit mindestens einem Zustrom verdünnt und als Mischstrom der Polymerisation zugeführt werden.

Das Verfahren zeichnet sich dadurch aus, dass bei der Repolymerisation folgende Schritte befolgt werden:
a) die Temperatur im Bereich von 220°C bis 280°C, der Wassergehalt im Bereich von 20 bis 40 Gew.-% und die Verweilzeit im Bereich von 0,5 bis 20 h zur Maximierung des Oligomer-Abbaus eingestellt wird,
b) der sich aufbauende Druck durch Zudosierung mindestens eines im Wesentlichen Caprolactam enthaltenden Teilstroms reduziert wird, so dass eine unmittelbare Einspeisung des Mischstroms in den Polyamidherstellungsprozess ermöglicht wird.

Unter Maximierung des Oligomer-Abbaus ist im Rahmen der vorliegenden Erfindung eine optimale Raum-Zeit-Ausbeute der Repolymerisation zu verstehen, was auf die folgenden Punkte zurückzuführen ist.

Die Effektivität des Oligomer-Abbaus während einer Repolymerisation ist abhängig von den Betriebsparametern Temperatur, Wassergehalt und Verweilzeit. Bei Vorgabe von zwei Parametern, ergibt sich hinsichtlich einer geringsten absoluten Menge an cyclischem Dimer am Ausgang der Repolymerisation zwangsläufig der dritte Parameter. Die Ermittlung dieser Parameter kann mittels der umfassend in der Literatur beschriebenen und verifizierten mathematischen Modelle zur Beschreibung der hydrolytischen Polymerisation von Caprolactam (z.B. "Mathematical Model of Industrial Continuous Polymerization of Nylon 6", I. Plazl, Ind. Eng. Chem. Res., Vol. 37, No. 3, 929-935, 1998.) erfolgen.

Wird beispielsweise die Verweilzeit vorgegeben, weil sie über Reaktorvolumen und Durchsatz festgelegt ist, so lässt sich für jede Betriebstemperatur ein optimaler Wassergehalt bestimmen. Genauso lässt sich bei vorgegebenem Wassergehalt (vgl. Verdampferanlage) für jede Reaktorkapazität (Verweilzeit) eine optimale Temperatur angeben.

Nur rein beispielhaft werden in Tabelle 1 für einen vorgegebenen Wassergehalt von 25 Gew.-% in der Repolymerisation die optimalen Temperaturen bei unterschiedlichen Verweilzeiten aufgeführt:

**Tabelle 1:**

| | | | | | | | |
|---|---|---|---|---|---|---|---|
| Verweilzeit [h] | 1 | 2 | 3 | 4 | 5 | 8 | 15 |
| Temperatur [°C] | 277 | 261 | 252 | 246 | 241 | 232 | 220 |

Es ist bevorzugt, dass der mindestens eine im Wesentlichen Caprolactam enthaltende Zustrom an einer Einspeisestelle zwischen der Repolymerisation und einem Vormischer zudosiert wird, wodurch die Konzentration des Caprolactams vor dem Vormischer erhöht und ggf. die Temperatur verringert wird und damit der Druck dem im Vormischer herrschenden Druck soweit angenähert wird, dass eine Rückführung des Mischstroms in den Polyamidherstellungsprozess möglich ist.

Eine weitere bevorzugte Ausführungsform sieht vor, dass der Zustrom ein im Wesentlichen Caprolactam enthaltender Teilstrom ist, der nach der Repolymerisation vom Extraktwasserstrom über einen Bypass vom Vormischer abgezweigt und als Zirkularstrom vor dem Vormischer wieder zugeführt wird.

Ebenso kann nach der Zudosierung des Zustroms ein statischer Mischer zur besseren Vermischung des Repolymerisats und des Zustroms eingesetzt werden.

Weiterhin ist es bevorzugt, dass nach der Repolymerisation und vor der Zudosierung des Zustroms in einem Entspannungsverdampfer eine adiabatische Entspannung des Repolymerisats erfolgt.

Der Entspannungsverdampfer wird dabei vorzugweise auf eine im Wesentlichen an den Schmelzpunkt des Repolymerisats angepasste Temperatur, bevorzugt 150°C bis 220°C, beheizt oder vollständig thermisch isoliert. Der Druck wird dabei im Entspannungsverdampfer so eingestellt, dass ein Gefrieren der Polymerschmelze verhindert wird. Vorzugweise beträgt der Druck im Entspannungsverdampfer 4 bis 10 bar. Die Entspannung erfolgt vorzugsweise auf eine Packung oder in Fallfilmen.

Die Repolymerisation wird bei einer Temperatur von 220°C bis 280°C, bevorzugt bei 240-270°C durchgeführt. Der Vormischer wird vorzugweise bei einer Temperatur von 180°C bis 220°C und einem Druck von 1 bis 6 bar betrieben.

Es ist weiter bevorzugt, dass der mindestens eine im Wesentlichen Caprolactam enthaltende Zustrom aus Frischlactam besteht oder dieses im Wesentlichen enthält und an einer Einspeisestelle vor einem Vormischer zudosiert wird, wodurch die Konzentration des Caprolactams im Mischstrom vor dem Vormischer erhöht, der Wassergehalt gesenkt und die Temperatur ggf. verringert wird und damit der Druck dem im Vormischer herrschenden Druck angepasst wird.

Gemäß dem erfindungsgemäßen Verfahren können vorzugsweise 2 bis 10, besonders bevorzugt 2 bis 4, Herstellungslinien zusammengeführt und dann der Repolymerisation zugeführt werden. Die Herstellungslinie umfasst erfindungsgemäß auch die Polymerisation.

Erfindungsgemäß wird ebenso eine Vorrichtung zur kontinuierlichen Rückführung von Extraktwässern in den Polyamidherstellungsprozess mit den Schritten der Polymerisation, der Granulierung und der anschließenden Extraktion der Granulate mit Wasser bereitgestellt, die die folgenden Komponenten enthält:
a) einen Repolymerisator zum Abbau cyclischer Oligomere,
b) einen Vormischer zur Vermischung von Frischlactam, ggf. Additiven und Mischstrom,
c) einen Bypass für die Rückführung eines im Vormischer abgezweigten und an einer Einspeisestelle vor dem Vormischer zudosierten Zirkularstroms sowie
d) eine im Bypass angeordnete Pumpe zur Förderung des Zirkularstroms.

Vorzugsweise ist zwischen dem Repolymerisator und der Einspeisestelle ein Entspannungsverdampfer zur adiabatischen Entspannung des Extraktwasserstroms angeordnet.

Es ist weiter bevorzugt, dass zwischen der Einspeisestelle und dem Vormischer ein statischer Mischer zur besseren Vermischung des Repolymerisats und des Zirkularstroms angeordnet ist.

Anhand der nachfolgenden Figuren und Beispiele soll der erfindungsgemäße Gegenstand näher erläutert werden, ohne diesen auf die hier gezeigten spezifischen Ausführungsformen einschränken zu wollen.
Fig. 1 zeigt anhand einer schematischen Darstellung einen aus dem Stand der Technik bekannten Polymerisationsprozess mit zwei Druckstufen.
Fig. 2 zeigt schematisch den Prozessablauf einer ersten erfindungsgemäßen Variante.
Fig. 3 zeigt schematisch den Prozessablauf einer zweiten erfindungsgemäßen Variante.
Fig. 4 zeigt schematisch den Prozessablauf einer dritten erfindungsgemäßen Variante.

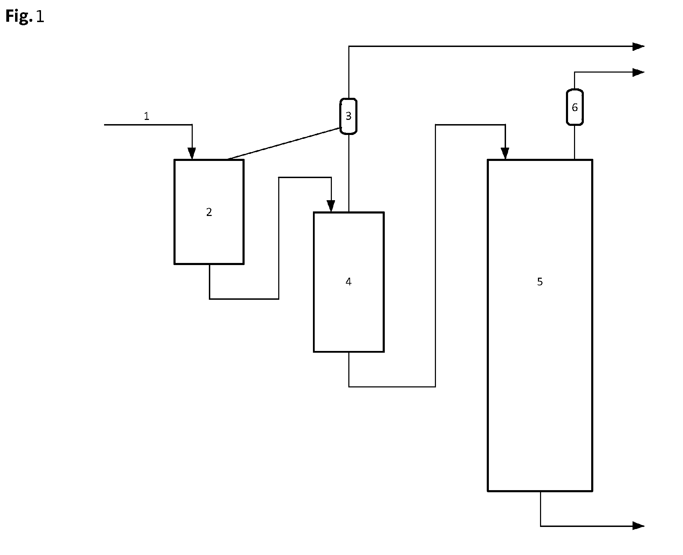

Ein aus dem Stand der Technik bekannter Polymerisationsprozess mit zwei Druckstufen ist schematisch in Fig. 1 dargestellt. Die Edukte 1 (Caprolactam, Wasser und evtl. Additive) werden in einem Vormischer 2 vereinigt und bei Temperaturen im Bereich von 180-220°C, Drücken von 2 bis 4 bar und einer Verweilzeit im Bereich von 0,5 bis 1,5 h die Ringöffnung und die Umsetzung von Caprolactam gestartet. Überschüssiges Wasser wird über eine Kolonne 3 entfernt, die optional mit dem Prepolymerisationsreaktor 4 verknüpft ist, um Equipment zu sparen. Aus dem Vormischer 2 gelangt die Reaktionsmasse in den Prepolymerisationsreaktor 4, der am Kopf bei Temperaturen im Bereich von 200 bis 240°C und Drücken von 1 bis 4 bar betrieben und typischerweise für Verweilzeiten von 3 bis 8 h ausgelegt wird. Wird eine verbrückende Kolonne 3 verwendet, wie in Fig. 1 gezeigt, sind die Drücke jeweils am Kopf des Vormischers 2 und des Prepolymerisators 4 gleich; grundsätzlich können aber auch getrennte Kolonnen mit eigenen Druckbereichen verwendet werden. Im Prepolymerisationsreaktor erhöht sich aufgrund der freiwerdenden Reaktionswärme die Temperatur bis zum Auslass auf 240 bis 270°C und der Umsatz an Caprolactam erreicht näherungsweise seinen Gleichgewichtswert. Die Reaktionsmasse wird anschließend in ein VK-Rohr 5 (VK steht für vereinfacht kontinuierlich) überführt, bei dem am Kopf bei Temperaturen von 240 bis 280°C und Drücken von 0,5 bis 1,5 bar möglichst viel Wasser ausgetrieben und über eine Kolonne 6 entfernt wird, um die Molmasse des Polyamids im weiteren Verlauf hin zu hohen Polymerisationsgraden zu verschieben. Im mittleren Teil des VK-Rohrs erhöht sich die Temperatur der Schmelze etwas durch die Exothermie der Reaktion und wird im unteren Teil auf 240 bis 255°C abgekühlt. Typische Verweilzeiten im VK-Rohr liegen bei 6 bis 15 h. Anschließend wird die Schmelze ausgetragen der weiteren Verarbeitung, z.B. der Granulierung mit anschließender Extraktion, zugeführt.

Die Extraktwässer, die der Polymerisation zugeführt werden, werden in der Regel nur soweit eingeengt, dass die (cyclischen) Oligomere nicht ausfallen, was Blockierungen oder Ablagerungen in Filtern oder Rohrleitungen verursachen kann. Um die Löslichkeit der Oligomere zu erhöhen, wird häufig Caprolactam zugesetzt und letztlich der organische Anteil am Ausgang der Eindampfung auf 60 bis 90 Gew.-% (entsprechend Wassergehalte von 10 bis 40 Gew.-%), bevorzugt 65 bis 75 Gew.-% (entsprechend Wassergehalte von 25 bis 35 Gew.-%) eingestellt.

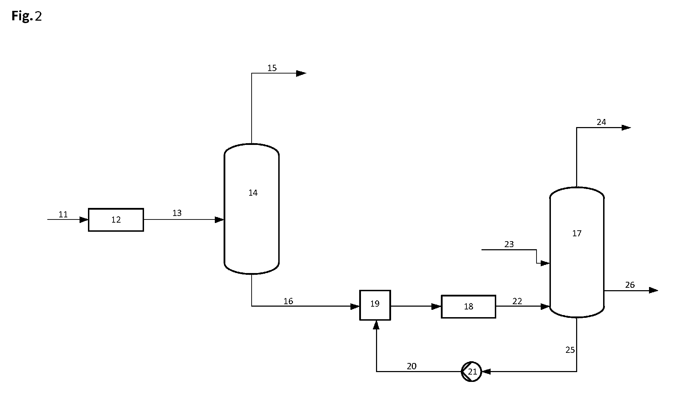

In Fig. 2 ist schematisch die Verknüpfung über einen Bypass mit vorangehender adiabatischer Entspannung dargestellt und wird im Folgenden zunächst allgemein und anschließend anhand eines konkreten Beispiels beschrieben.

Die konzentrierten Extraktwässer 11 werden kontinuierlich in den Repolymerisationsreaktor 12 gefördert. Dieser kann ein Rohrreaktor sein, der für die gewählte Temperatur (220 bis 280°C), den autogenen Druck über der Schmelze und die bis zum Erreichen des gewünschten Abbaugrades der cyclischen Oligomere benötigte Verweilzeit ausgelegt sein muss. Z.B. bietet sich ein vertikales, von unten nach oben durchströmtes, von innen und außen beheiztes Rohr an, es kann aber grundsätzlich jede Form von Reaktor, der bei autogenem Druck arbeitet, verwendet werden. Der aus der Abbaustufe 12 kommende Strom 13 wird einer adiabatischen Entspannung gegen 6-10 bar im Flash-Tank 14 unterzogen. Es genügt eine Außenbeheizung oder eine vollständige thermische Isolierung des Tanks. Die Entspannung kann z.B. auf eine Packung erfolgen oder in Fallfilmen. Grundsätzlich eignet sich an dieser Stelle jede verfahrenstechnische Vorrichtung zum Austreiben von flüchtigen Verbindungen aus Polymerschmelzen. Bei der Entspannung verdampfen Wasser und Spuren von Caprolactam, die über Strom 15 entfernt werden und deren Wärme an anderer Stelle im Prozess genutzt werden kann. Die flüssige Phase in Flash-Tank 14 kühlt sich durch die adiabatische Entspannung deutlich ab. Der Druck im Flash-Tank 14 wird hierbei so eingestellt, dass ein genügend hoher Wasseranteil gehalten und damit der Schmelzpunkt nicht unterschritten wird. Eine direkte Entspannung von Strom 16 in einen Vormischer, der typischerweise bei 2 bis 4 bar betrieben wird, birgt die Gefahr des Gefrierens der Schmelze am Zulauf. Deshalb wird in der vorgeschlagenen Erfindung Strom 16 mit einem zirkulierenden Bypass des Vormischers 17 verdünnt, der hauptsächlich aus Caprolactam besteht. Vorzugsweise wird für eine verbesserte Vermischung der Ströme ein statischer Mischer 18 kurz nach der Dosierstelle 19 eingesetzt. Durch die Vermischung der Ströme wird der Wasseranteil erheblich gesenkt, und der von Caprolactam stark erhöht, was die Gefahr eines Gefrierens der Schmelze beim Entspannen in den Vormischer ausschließt. Das Verhältnis von Strom 16 zu 20 wird über die Förderleistung der Pumpe 21 so gewählt, dass der Dampfdruck von Strom 22 dem Arbeitsdruck des Vormischers 17 möglichst nahe kommt. Eine Überführung von Strom 22 in den Vormischer 17 ist dann direkt und ohne Risiko des Gefrierens möglich. In den Vormischer, der typischerweise bei 180 bis 220°C und 2 bis 4 bar betrieben wird, wird kontinuierlich über Strom 23 das Frischlactam und eventuell Additive oder Stabilisatoren zudosiert und über Strom 24 werden kontinuierlich Wasser und Spuren anderer flüchtiger Verbindungen abgeführt. Die Wärmeenergie des heißen Dampfes 15 und 25 kann z.B. für die Vorheizung von Strom 23 genutzt werden. Ein Teil der Reaktionsmischung aus dem Vormischer 17 wird über Strom 25 und Pumpe 21 zirkuliert; ein weiterer Teil wird kontinuierlich über Strom 26 entnommen und kann z.B. direkt dem Prepolymerisationsreaktor und damit dem herkömmlichen Verfahren zugeführt werden.

### Beispiel 1

Das folgende Beispiel basiert auf dem in Fig. 2 schematisch dargestellten Prozessablauf.

Ein Strom bestehend aus 434 kg/h Caprolactam, 200 kg/h Wasser und 16,4 kg/h cyclischem Dimer wird einem Rohrreaktor mit 258°C und 2 h Verweilzeit (optimierte Abbaustufe) zugeführt. Der Caprolactamgehalt sinkt dabei auf 7,5 Gew.-%, der des Dimers auf 0,72 Gew.-%. Der Dampfdruck über der Reaktionsmasse beträgt 32,5 bar. Der Strom wird anschließend einer einstufigen, adiabatischen Entspannung (Flash) gegen 8 bar unterzogen. Dabei werden 78,7 kg/h Wasserdampf und Spuren von Caprolactam mit einer Temperatur von 184,0°C frei, sodass sich der Wassergehalt der Reaktionsmischung auf 20,5 Gew.-% absenkt. Das Reaktionsmedium kühlt sich dabei ebenfalls auf 184,0°C ab, bleibt aber oberhalb ihres Schmelzpunktes, der bei diesem Wasser- und Caprolactamgehalt unterhalb von 170°C liegt. Dieser Strom wird in einen zirkulierenden Bypass-Strom des Vormischers geführt, vorzugsweise vor einem statischen Mischer. Der Vormischer wird bei 3 bar und 200°C betrieben und es werden in den Vormischer 2083 kg/h Frischlactam zudosiert. Die Temperatur des Bypasses beträgt 200°C (Temperatur des Vormischers) und das Flottenverhältnis von Strom 25 zu 26 wird mit drei Teilen zu einem Teil so gewählt, dass der Dampfdruck der vereinigten Ströme auf 5,0 bar sinkt. Der Zirkulationsstrom besteht vor der Vereinigung mit dem Auslass des Flash-Tanks aus 3,6 Gew.-% Wasser, 64,8 Gew.-% Caprolactam und 31,6 Gew.-% Polyamid 6. Nach der Vermischung beträgt die Temperatur 195,8°C und der Strom setzt sich aus 7,8 Gew.-% Wasser, 50,3 Gew.-% Caprolactam und 41,9 Gew.-% Polyamid 6 zusammen. Der Dampfdruck über der Schmelze beträgt an dieser Stelle 5,0 bar. Der Strom wird nun in den Vormischer, der bei 200°C und 3 bar betrieben wird, entspannt und gleichzeitig mit 2083 kg/h Caprolactam vermischt. Unter diesen Bedingungen verdampfen weitere 18,9 kg/h Wasser. Ebenfalls verdampftes Caprolactam wird in den Vormischer rückgeführt. Von der erhaltenen Reaktionsmischung wird über eine Pumpe der zirkulierende Strom abgezweigt. Der das System verlassende Strom 26 hat eine Temperatur von 200°C, einen Wassergehalt von 3,6 Gew.-%, 64,8 Gew.-% Caprolactam und 31,6 Gew.-% Polyamid 6 und einen Dampfdruck von 3 bar. Dieser kann direkt in einen Prepolymerisationsreaktor überführt werden, der z.B. bei 3 bar und 240°C arbeitet, um den Umsatz an Caprolactam zu vervollständigen und weiteres Wasser aus dem System zu entfernen.

### Beispiel 2

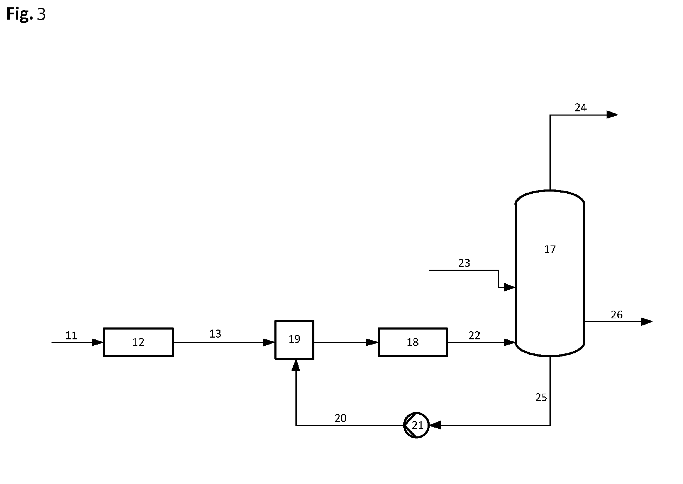

Über die Einstellung eines größeren Flottenverhältnisses als in Beispiel 1 lässt sich auf die adiabatische Entspannung verzichten und Strom 13 direkt in den Bypass dosieren. Eine schematische Darstellung dieser Möglichkeit ist in Fig. 3 gezeigt.

Strom 11 wird mit gleicher Zusammensetzung wie in Beispiel 1 der optimierten Abbaustufe 12 zugeführt. Der Caprolactamgehalt sinkt dabei auf 7,5 Gew.-%, der des Dimers auf 0,72 Gew.-%. Der Dampfdruck über der Reaktionsmasse beträgt 32,5 bar. Dieser Strom wird direkt in einen zirkulierenden Bypass-Strom 20 des Vormischers 17 geführt, vorzugsweise vor einem statischen Mischer 18. Der Vormischer wird bei 200°C betrieben und es werden 2083 kg/h Frischlactam zudosiert. Die Temperatur des Bypasses beträgt 200°C (Temperatur des Vormischers) und das Flottenverhältnis von Strom 25 zu 26 wird mit 10 Teilen zu einem Teil so gewählt, dass der Dampfdruck der vereinigten Ströme auf 4,3 bar sinkt. Der Zirkulationsstrom 20 besteht vor der Vereinigung mit Strom 13 aus 3,6 Gew.-% Wasser, 62,9 Gew.-% Caprolactam und 33,5 Gew.-% Polyamid 6. Nach der Vermischung beträgt die Temperatur 198,4°C und Strom 22 setzt sich aus 6,0 Gew.-% Wasser, 57,9 Gew.-% Caprolactam und 36,1 Gew.-% Polyamid 6 zusammen. Der Dampfdruck über der Schmelze beträgt an dieser Stelle 4,3 bar. Strom 22 wird nun in den Vormischer 17, der bei 200°C und 3 bar betrieben wird, entspannt und gleichzeitig mit Strom 23 bestehend aus 2083 kg/h Caprolactam vermischt. Unter diesen Bedingungen verdampfen 96,7 kg/h Wasser. Ebenfalls verdampftes Caprolactam wird in den Vormischer rückgeführt. Von der erhaltenen Reaktionsmischung wird über eine Pumpe 21 der zirkulierende Strom 25 abgezweigt. Der das System verlassende Strom 26 hat eine Temperatur von 200°C, einen Wassergehalt von 3,6 Gew.-%, 62,9 Gew.-% Caprolactam und 33,5 Gew.-% Polyamid 6 und einen Dampfdruck von 3 bar. Dieser kann direkt in einen Prepolymerisationsreaktor überführt werden, der z.B. bei 3 bar und 240°C arbeitet, um den Umsatz an Caprolactam zu vervollständigen und weiteres Wasser aus dem System zu entfernen.

### Beispiel 3

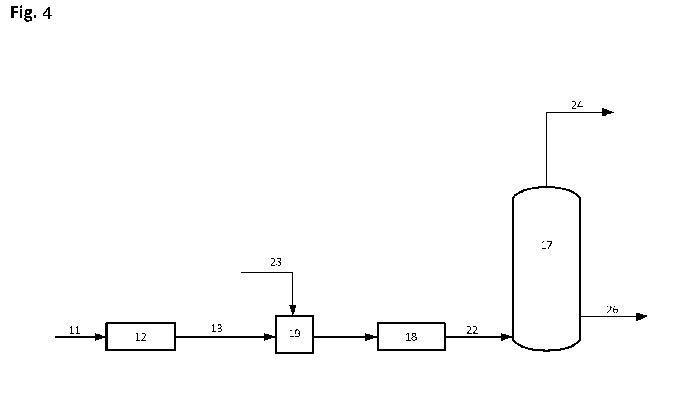

Anstelle der direkten Einbringung in einen zirkulierenden Bypass des Vormischers, kann die Dampfdruckabsenkung auch durch die Verdünnung mit Frischlactam erfolgen. Strom 23 muss in diesem Fall soweit vorgeheizt werden, dass der Festpunkt der Mischung nicht erreicht wird. Dieser Ablauf ist schematisch in Fig. 4 dargestellt.

Strom 11 wird wie in Beispiel 1 der optimierten Abbaustufe zugeführt. Der Caprolactamgehalt sinkt dabei auf 7,5 Gew.-%, der des Dimers auf 0,72 Gew.-%. Der Dampfdruck über der Reaktionsmasse beträgt 32,5 bar. Dieser Strom wird direkt mit dem Frischlactam 23 an der Dosierstelle 19 vereinigt, vorzugsweise vor einem statischen Mischer 18. Die Temperatur von 23 wird mit 150°C so gewählt, dass die Temperatur des vereinigten Stroms 22 180,6°C beträgt und damit oberhalb des Schmelzbereiches liegt. Der vereinigte Strom 22 besteht aus 7,1 Gew.-% Wasser, 78,0 Gew.-% Caprolactam und 14,9 Gew.-% Polyamid 6. Der Dampfdruck über der Schmelze beträgt an dieser Stelle 3,3 bar. Strom 22 wird nun in den Vormischer 17, der bei 200°C und 3 bar betrieben wird, entspannt. Unter diesen Bedingungen verdampfen 116,3 kg/h Wasser. Verdampftes Caprolactam wird in den Vormischer rückgeführt. Der das System verlassende Strom 26 hat eine Temperatur von 200°C, einen Wassergehalt von 3,0 Gew.-%, 80,3 Gew.-% Caprolactam und 16,7 Gew.-% Polyamid 6 und einen Dampfdruck von 3 bar. Dieser kann direkt in einen Prepolymerisationsreaktor überführt werden, der z.B. bei 3 bar und 240°C arbeitet, um den Umsatz an Caprolactam zu vervollständigen und weiteres Wasser aus dem System zu entfernen.

### Vergleichsbeispiel 4

### Virgin-Lactam-Linie:

2600 kg/h Caprolactam werden mit 150 kg/h Wasser und 3 kg/h Essigsäure in einem zweistufigen Prozess zu Polyamid 6 umgesetzt. Dazu wird die Mischung einem Prepolymerisationsreaktor zugeführt, der am Kopf bei 240°C, 4 bar und einer Verweilzeit von 1 h 92,4 kg/h Wasser verdampft. Anschließend gelangt die Mischung in einen adiabatischen unteren Teil mit 2,5 h Verweilzeit, bei dem sich bis zum Auslass die Temperatur auf 264°C erhöht und das Caprolactam bis auf 8,5 Gew.-% umsetzt. Der Dimergehalt an dieser Stelle beträgt 0,50 Gew.-%. Die Reaktionsmischung wird nun in ein bei Atmosphärendruck betriebenes VK-Rohr überführt, bei dem am Kopf bei 1 h Verweilzeit und 275°C weitere 51,3 kg/h Wasser ausgetrieben werden. Im unteren Teil mit insgesamt 8 h Verweilzeit wird die Reaktionstemperatur nach einem adiabatischen Teil (3 h) letztlich bis auf 240°C abgesenkt. Der Caprolactamgehalt beträgt am Auslass 8,3 Gew.-%, der des Dimers 0,66 Gew.-% und die relative Viskosität, gemessen als 1 Gew.-%ige Lösung in konzentrierter Schwefelsäure, beträgt 2,69.

### Vergleichsbeispiel 5

### Linie mit direkter Rückführung:

Unter identischen Reaktionsbedingungen wie in Beispiel 2 werden dem Prozess 2578 kg/h Caprolactam, 150 kg/h Wasser, 3 kg/h Essigsäure und 22 kg/h cyclisches Dimer zugeführt. Im Auslass des VK-Rohrs betragen der Gehalt an Caprolactam 8,3 Gew.-%, der des Dimers 0,85 Gew.-% (22 kg/h) und die relative Viskosität 2,69.

### Vergleichsbeispiel 6

### Linie mit Rückführung und optimierter Repolymerisation:

Ein Strom bestehend aus 434 kg/h Caprolactam, 200 kg/h Wasser und 16,0 kg/h cyclischem Dimer wird in einem geschlossenen Rohrreaktor 2 h unter autogenem Druck bei 258°C behandelt. Der Caprolactamgehalt sinkt dabei auf 7,5 Gew.-%, der des Dimers auf 0,72 Gew.-%. Die erhaltene Reaktionsmischung wird im Kopf des Prepolymerisationsreaktors mit weiteren 2150 kg/h Caprolactam und 3 kg/h Essigsäure vereinigt und unter identischen Reaktionsbedingungen wie in den Beispielen 2 und 3 weiter prozessiert, mit der Ausnahme, dass am Kopf des VK-Rohrs der Druck auf 0,83 bar gesenkt wird. Im Auslass des VK-Rohrs wird ein Caprolactamgehalt von 8,6 Gew.-% und ein Gehalt an cyclischem Dimer von 0,61 Gew.-% (16,0 kg/h) erhalten. Die relative Viskosität beträgt an dieser Stelle 2,69.

## Patentansprüche

1. Verfahren zur kontinuierlichen Rückführung von Extraktwässern im Polyamidherstellungsprozess mit den Schritten der Polymerisation, der Granulierung und der anschließenden Extraktion der Granulate mit Wasser, wobei die Extraktwässer mindestens einer Herstellungslinie aufkonzentriert und als Extraktwasserstrom (11) einer Repolymerisation (12) zum Abbau cyclischer Oligomere unterzogen, als Repolymerisat (12,16) mit mindestens einem Zustrom (20,23) verdünnt und anschließend als Mischstrom (26) der Polymerisation zugeführt werden,
**dadurch gekennzeichnet, dass** bei der Repolymerisation:
a) die Temperatur im Bereich von 220°C bis 280°C, der Wassergehalt im Bereich von 20 bis 40 Gew.-% und die Verweilzeit im Bereich von 0,5 bis 20 h zur Maximierung des Oligomer-Abbaus eingestellt wird,
b) der sich aufbauende Druck durch Zudosierung mindestens eines im Wesentlichen Caprolactam enthaltenden Zustroms (20,23) reduziert wird, so dass eine unmittelbare Einspeisung des Mischstroms (22,26) in den Polyamidherstellungsprozess ermöglicht wird.

2. Verfahren nach Anspruch 1,
**dadurch gekennzeichnet, dass** der mindestens eine im Wesentlichen Caprolactam enthaltende Zustrom (20,23) an einer Einspeisestelle (19) zwischen der Repolymerisation und einem Vormischer (17) zudosiert wird, wodurch die Konzentration des Caprolactams vor dem Vormischer (17) erhöht und ggf. die Temperatur verringert wird und damit der Dampfdruck über der Schmelze dem im Vormischer (17) herrschenden Druck soweit angenähert wird, dass eine Rückführung des Mischstroms in den Polyamidherstellungsprozess möglich ist.

3. Verfahren nach einem der vorhergehenden Ansprüche,
**dadurch gekennzeichnet, dass** der mindestens eine Zustrom (20,23) ein im Wesentlichen Caprolactam enthaltender Teilstrom ist, der nach der Repolymerisation (12) über einen Bypass abgezweigt und dem Repolymerisat (16) in einem Kreislauf vor dem Vormischer (17) als Zirkularstrom (20) wieder zugeführt wird.

4. Verfahren nach einem der vorhergehenden Ansprüche,
**dadurch gekennzeichnet, dass** nach der Zudosierung des Zustroms (20) ein statischer Mischer (18) zur besseren Vermischung des Repolymerisats (16) und des Zustroms (20) eingesetzt wird.

5. Verfahren nach einem der vorhergehenden Ansprüche,
**dadurch gekennzeichnet, dass** nach der Repolymerisation (12) und vor der Zudosierung des Zustroms (19) in einem Entspannungsverdampfer (14) eine adiabatische Entspannung des Repolymerisats (16) erfolgt.

6. Verfahren nach dem vorhergehenden Anspruch,
**dadurch gekennzeichnet, dass** der Entspannungsverdampfer (14) auf eine im Wesentlichen an den Schmelzpunkt des Repolymerisats (16) angepasste Temperatur, insbesondere von 150 bis 220 °C beheizt oder vollständig thermisch isoliert wird, wobei der Druck im Entspannungsverdampfer (14) so eingestellt wird, dass ein Gefrieren der Polymerschmelze verhindert wird, vorzugsweise im Bereich von 4 bis 10 bar.

7. Verfahren nach einem der Ansprüche 5 oder 6,
**dadurch gekennzeichnet, dass** die Entspannung auf eine Packung oder in Fallfilmen erfolgt.

8. Verfahren nach einem der vorhergehenden Ansprüche,
**dadurch gekennzeichnet, dass** die Repolymerisation bei einer Temperatur von 240 bis 270°C und/oder einem Wassergehalt von 25 bis 35 Gew.-% und/oder einer Verweilzeit von 1 bis 15 h durchgeführt wird.

9. Verfahren nach einem der vorhergehenden Ansprüche,
**dadurch gekennzeichnet, dass** der Vormischer (17) bei einer Temperatur von 180 bis 220°C und einem Druck von 1 bis 6 bar betrieben wird.

10. Verfahren nach Anspruch 1,
**dadurch gekennzeichnet, dass** der mindestens eine im Wesentlichen Caprolactam enthaltende Zustrom (23) aus Frischlactam besteht oder dieses im Wesentlichen enthält und an einer Einspeisestelle (19) vor einem Vormischer (17) zudosiert wird, wodurch die Konzentration des Caprolactams vor dem Vormischer (17) erhöht und die Temperatur ggf. verringert wird und damit der Dampfdruck über der Schmelze dem im Vormischer (17) herrschenden Druck angepasst wird.

11. Verfahren nach einem der vorhergehenden Ansprüche,
**dadurch gekennzeichnet, dass** die Extraktwässer mehrerer Herstellungslinien, bevorzugt von 2 bis 10, besonders bevorzugt von 2 bis 4 Herstellungslinien zusammengeführt und dann der Repolymerisation (12) zugeführt werden.

12. Vorrichtung zur kontinuierlichen Rückführung von Extraktwässern im Polyamidherstellungsprozess mit den Schritten der Polymerisation, der Granulierung und der anschließenden Extraktion der Granulate mit Wasser enthaltend:
a) einen Repolymerisator (12) zum Abbau cyclischer Oligomere,
b) einen Vormischer (17) zur Vermischung von Frischlactam, ggf. Additiven und Mischstrom (22,26),
c) einen Bypass für die Rückführung eines im Vormischer (17) abgezweigten und an einer Einspeisestelle (19) vor dem Vormischer (17) zudosierten Zirkularstroms (20) sowie
d) eine im Bypass angeordnete Pumpe (21) zur Förderung des Zirkularstroms (20).

13. Vorrichtung nach Anspruch 12,
**dadurch gekennzeichnet, dass** zwischen dem Repolymerisator (12) und der Einspeisestelle (19) ein Entspannungsverdampfer (14) zur adiabatischen Entspannung des Repolymerisats (16) angeordnet ist.

14. Vorrichtung nach Anspruch 12 oder 13,
**dadurch gekennzeichnet, dass** zwischen der Einspeisestelle (19) und dem Vormischer (17) ein statischer Mischer (18) zur besseren Vermischung des Repolymerisats (16) und des mindestens einen Zustroms (20,23) angeordnet ist.

## Claims

1. Method for the continuous recirculation of extract water in the polyamide production process, having the steps of polymerisation, of granulation and of subsequent extraction of the granulates with water, the extract water of at least one production line being concentrated and being subjected as extract water flow (11) to a repolymerisation (12) in order to decompose cyclic oligomers, being diluted as repolymer (12, 16) with at least one inflow (20, 23) and subsequently being supplied as a mixed flow (26) to the polymerisation,
**characterised in that** during repolymerisation:
a) the temperature is adjusted in the range of 220°C to 280°C, the water content in the range of 20 to 40% by weight and the dwell time in the range of 0.5 to 20 h in order to maximise the oligomer decomposition,
b) the increasing pressure is reduced by metering-in of at least one inflow (20, 23) comprising essentially caprolactam so that immediate feeding of the mixed flow (22, 26) into the polyamide production process is made possible.

2. Method according to claim 1,
**characterised in that** the at least one inflow (20, 23) comprising essentially caprolactam is metered-in at a feed point (19) between the repolymerisation and a premixer (17), as a result of which the concentration of the caprolactam is increased before the premixer (17) and possibly the temperature is reduced and hence the vapour pressure above the melt approximates to the pressure prevailing in the premixer (17) until recirculation of the mixed flow into the polyamide production process is possible.

3. Method according to one of the preceding claims,
**characterised in that** the at least one inflow (20, 23) is a partial flow comprising essentially caprolactam, which partial flow branches off via a bypass after the repolymerisation (12) and is supplied again to the repolymer (16) in a circulation before the premixer (17) as circular flow (20).

4. Method according to one of the preceding claims,
**characterised in that**, after the metering-in of the inflow (20), a static mixer (18) is used for improved mixing of the repolymer (16) and of the inflow (20).

5. Method according to one of the preceding claims,
**characterised in that**, after the repolymerisation (12) and before the metering-in of the inflow (19), an adiabatic expansion of the repolymer (16) is effected in a flash evaporator (14).

6. Method according to the preceding claim,
**characterised in that** the flash evaporator (14) is heated to a temperature adapted essentially to the melting point of the repolymer (16), in particular of 150 to 220°C, or is completely insulated thermally, the pressure in the flash evaporator (14) being adjusted such that congealing of the polymer melt is prevented, preferably in the range of 4 to 10 bar.

7. Method according to one of the claims 5 or 6,
**characterised in that** the expansion is effected on packing or in falling films.

8. Method according to one of the preceding claims,
**characterised in that** the repolymerisation is implemented at a temperature of 240 to 270°C and/or a water content of 25 to 35% by weight and/or a dwell time of 1 to 15 h.

9. Method according to one of the preceding claims,
**characterised in that** the premixer (17) is operated at a temperature of 180 to 220°C and at a pressure of 1 to 6 bar.

10. Method according to claim 1,
**characterised in that** the at least one inflow (23) comprising essentially caprolactam consists of virgin lactam or essentially comprises this and is metered-in at a feed point (19) before a premixer (17), as a result of which the concentration of caprolactam is increased before the premixer (17) and the temperature is possibly reduced and hence the vapour pressure above the melt is adapted to the pressure prevailing in the premixer (17).

11. Method according to one of the preceding claims,
**characterised in that** the extract water of a plurality of production lines, preferably of 2 to 10, particularly preferred of 2 to 4, production lines is combined and then supplied to the repolymerisation (12).

12. Device for the continuous recirculation of extract water in the polyamide production process, having the steps of polymerisation, of granulation and of subsequent extraction of the granulates with water comprising:
a) a repolymeriser (12) for decomposition of cyclic oligomers,
b) a premixer (17) for mixing virgin lactam, possibly additives and mixed flow (22, 26),
c) a bypass for recirculation of a circular flow (20) which branches off in the premixer (17) and is metered-in at a feed point (19) before the premixer (17) and also
d) a pump (21), disposed in the bypass, for conveying the circular flow (20).

13. Device according to claim 12,
**characterised in that** a flash evaporator (14) for adiabatic expansion of the repolymer (16) is disposed between the repolymeriser (12) and the feed point (19).

14. Device according to claim 12 or 13,
**characterised in that** a static mixer (18) for improved mixing of the repolymer (16) and of the at least one inflow (20, 23) is disposed between the feed point (19) and the premixer (17).

## Revendications

1. Procédé de recyclage continu d'eaux d'extraction dans un procédé de production de polyamide comprenant les étapes de polymérisation, de granulation et enfin d'extraction des granulats avec de l'eau, les eaux d'extraction d'au moins une ligne de production étant concentrées et soumises à une repolymérisation (12) en tant que courant d'eaux d'extraction (11) pour la décomposition d'oligomères cycliques, diluées en tant que produit repolymérisé (12, 16) avec au moins un courant d'alimentation (20, 23), puis introduites dans la polymérisation en tant que courant de mélange (26),
**caractérisé en ce que**, lors de la repolymérisation :
a) la température est ajustée dans la plage allant de 220 °C à 280 °C, la teneur en eau dans la plage allant de 20 à 40 % en poids, et le temps de séjour dans la plage allant de 0,5 à 20 h pour maximiser la décomposition des oligomères,
b) la pression qui augmente est réduite par ajout d'au moins un courant d'alimentation contenant principalement du caprolactame (20, 23), afin de permettre une introduction directe du courant de mélange (22, 26) dans le procédé de production de polyamide.

2. Procédé selon la revendication 1, **caractérisé en ce que** ledit au moins un courant d'alimentation contenant principalement du caprolactame (20, 23) est introduit à un emplacement d'introduction (19) entre la repolymérisation et un prémélangeur (17), la concentration du caprolactame étant ainsi augmentée avant le prémélangeur (17) et la température étant éventuellement réduite, et la pression de vapeur au-dessus de la masse fondue étant ainsi rapprochée de la pression régnant dans le prémélangeur (17) de manière à permettre un recyclage du courant de mélange dans le procédé de production de polyamide.

3. Procédé selon l'une quelconque des revendications précédentes, **caractérisé en ce que** ledit au moins un courant d'alimentation (20, 23) est un courant partiel contenant principalement du caprolactame, qui est dérivé après la repolymérisation (12) par une dérivation et réintroduit dans le produit repolymérisé (16) dans un circuit avant le prémélangeur (17) en tant que courant circulaire (20).

4. Procédé selon l'une quelconque des revendications précédentes, **caractérisé en ce qu'**un mélangeur statique (18) est utilisé après l'ajout du courant d'alimentation (20) pour améliorer le mélange du produit repolymérisé (16) et du courant d'alimentation (20).

5. Procédé selon l'une quelconque des revendications précédentes, **caractérisé en ce qu'**une détente adiabatique du produit repolymérisé (16) a lieu après la repolymérisation (12) et avant l'ajout du courant d'alimentation (19) dans un évaporateur à détente (14).

6. Procédé selon la revendication précédente, **caractérisé en ce que** l'évaporateur à détente (14) est chauffé à une température principalement adaptée au point de fusion du produit repolymérisé (16), notamment de 150 à 220 °C, ou complètement isolé thermiquement, la pression dans l'évaporateur à détente (14) étant ajustée de manière à empêcher une congélation de la masse fondue polymère, de préférence dans la plage allant de 4 à 10 bar.

7. Procédé selon l'une quelconque des revendications 5 ou 6, **caractérisé en ce que** la détente a lieu sur un garnissage ou en films tombants.

8. Procédé selon l'une quelconque des revendications précédentes, **caractérisé en ce que** la repolymérisation est réalisée à une température de 240 à 270 °C et/ou à une teneur en eau de 25 à 35 % en poids et/ou pendant un temps de séjour de 1 à 15 h.

9. Procédé selon l'une quelconque des revendications précédentes, **caractérisé en ce que** le prémélangeur (17) est exploité à une température de 180 à 220 °C et à une pression de 1 à 6 bar.

10. Procédé selon la revendication 1, **caractérisé en ce que** ledit au moins un courant d'alimentation contenant principalement du caprolactame (23) est constitué de lactame frais ou contient principalement celui-ci, et est ajouté à un emplacement d'introduction (19) avant un prémélangeur (17), la concentration du caprolactame étant ainsi augmentée avant le prémélangeur (17) et la température étant éventuellement réduite, et la pression de vapeur au-dessus de la masse fondue étant ainsi adaptée à la pression régnant dans le prémélangeur (17).

11. Procédé selon l'une quelconque des revendications précédentes, **caractérisé en ce que** les eaux d'extraction de plusieurs lignes de production, de préférence de 2 à 10, de manière particulièrement préférée de 2 à 4, lignes de production sont réunies, puis introduites dans la repolymérisation (12).

12. Dispositif pour le recyclage continu d'eaux d'extraction dans un procédé de production de polyamide comprenant les étapes de polymérisation, de granulation et ensuite d'extraction des granulats avec de l'eau, contenant :
a) une unité de repolymérisation (12) pour la décomposition d'oligomères cycliques,
b) un prémélangeur (17) pour le mélange de lactame frais, éventuellement d'additifs et d'un courant de mélange (22, 26),
c) une dérivation pour le recyclage d'un courant circulaire (20) dérivé dans le prémélangeur (17) et introduit à un emplacement d'introduction (19) avant le prémélangeur (17), ainsi que
d) une pompe (21) agencée dans la dérivation pour le transport du courant circulaire (20).

13. Dispositif selon la revendication 12, **caractérisé en ce qu'**un évaporateur à détente (14) pour la détente adiabatique du produit repolymérisé (16) est agencé entre l'unité de repolymérisation (12) et l'emplacement d'introduction (19).

14. Dispositif selon la revendication 12 ou 13, **caractérisé en ce qu'**un mélangeur statique (18) destiné à améliorer le mélange du produit repolymérisé (16) et dudit au moins un courant d'alimentation (20, 23) est agencé entre l'emplacement d'introduction (19) et le prémélangeur (17).
